# DEMANDE DE BREVET EUROPEEN

(11) **EP 3 025 913 A1**
(43) Date de publication de la demande: **01.06.2016**
(21) Numéro de dépôt: 15190698.9
(22) Date de dépôt: 21.10.2015
(51) Int. Cl.: B60S 1/16, B60S 1/34, F16C 35/02, F16C 33/08, H02K 5/22, H02K 7/116

(54) **ELEMENT DE CARTER D'UN BOITIER DE MOTORISATION POUR UN ESSUIE-GLACE**

(30) Priorité: 26.11.2014 FR 1461502
(71) Demandeur: Valeo Systèmes d'Essuyage, 78321 Le Mesnil Saint Denis (FR)
(72) Inventeur: SERVIN, Alain, 86190 VILLIERS (FR); BLANCHET, Pierre, 86140 CLAIRVAUX (FR); COLLINET, Laurent, 86270 La Roche Posay (FR); VALLIERE, Jérôme, 86220 Les Ormes (FR); BEAUCHAMPS, Stéphane, 86180 BRUXEROLLES (FR)
(74) Mandataire: Vincent, Catherine Marie Marguerite

(57) **Abrégé**

L'invention concerne un élément de carter d'un boîtier de motorisation pour un essuieglace, en particulier de véhicule automobile, ledit élément de carter comportant un fût (7) configuré pour être traversé selon un axe (X) longitudinal par un arbre rotatif dudit boîtier de motorisation, ledit élément de carter comportant en outre une bague (107), montée coaxialement à l'intérieur d'une extrémité libre (101) dudit fût (7) et configurée pour être traversée par ledit arbre, caractérisé en ce que le fût (7) comprend ou porte des premiers moyens (1 06a-b-c) d'arrêt axial de ladite bague (107) vers l'extérieur dudit fût (7). Elle concerne également un procédé de réalisation dudit élément par déformation plastique de matière. Elle concerne aussi un boîtier de motorisation pour un essuie-glace comportant un tel élément de carter.

## Description

Le domaine de la présente invention est celui des équipements pour les véhicules, et plus précisément celui des équipements pour l'essuyage des vitres d'automobiles.

Une vitre d'automobile est en général essuyée au moyen d'au moins un balai d'essuie-glace qui comprend un corps longitudinal portant une lame d'essuyage, en général en caoutchouc, destinée à frotter contre la vitre du véhicule pour évacuer de l'eau en l'amenant en dehors du champ de vision du conducteur. Lorsque le balai est du type plat, en anglais « flat blade », il comporte en outre au moins une vertèbre longitudinale qui confère un cintrage à la lame, de manière à favoriser l'application de cette lame sur la vitre.

Le balai est porté par un bras qui est entraîné par un boîtier de motorisation dans un mouvement de va-et-vient angulaire. Il est connu d'entraîner le bras d'un essuie-glace en reliant l'une de ses extrémités à un arbre dudit boîtier, soit directement soit indirectement, au moyen d'un mécanisme de tringlerie, par exemple.

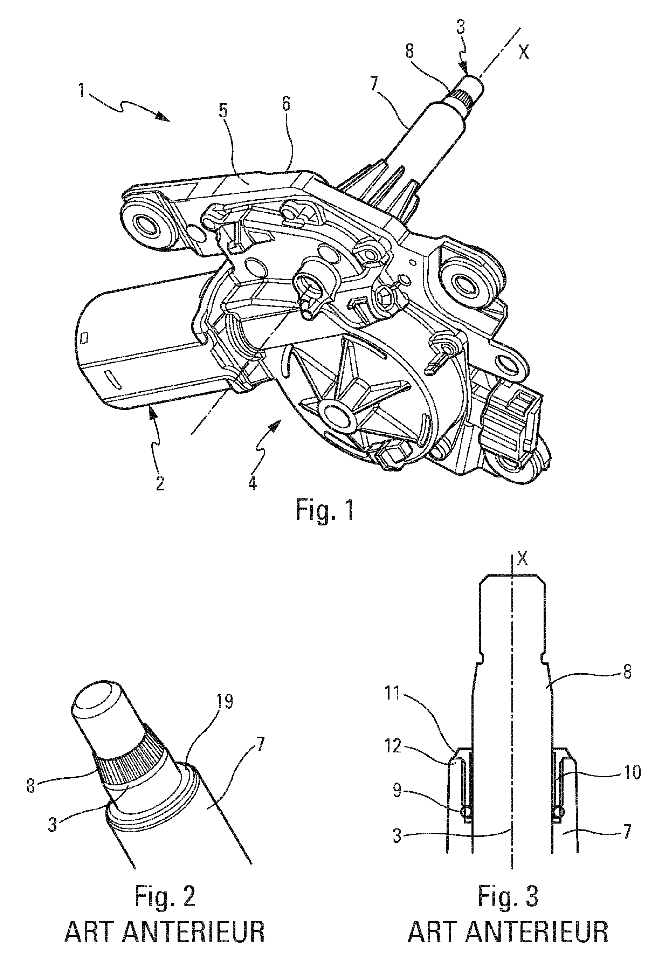

On a représenté sur la figure 1 un boîtier de motorisation 1 comportant un moteur électrique 2 dont l'arbre de sortie entraîne un arbre 3 d'entraînement du bras d'essuie-glace (non représenté). Le boîtier de motorisation 1 comprend des moyens de liaison (non visibles) de l'arbre de sortie du moteur électrique 2 à l'arbre d'entraînement 3, qui sont logés dans un carter 4 comprenant en général deux éléments 5, 6, à savoir une base 5 et un couvercle 6.

Les moyens de liaison transforment la rotation continue du moteur électrique 2 en mouvement de rotation en va-et-vient pour l'arbre d'entraînement 3. L'arbre d'entraînement 3 s'étend à l'intérieur d'un fût 7 du couvercle 6, qui s'étend en général perpendiculairement à l'arbre du moteur 2. L'arbre d'entraînement 3 comprend une extrémité ou tête 8 qui dépasse du fût 7 et qui permet de mettre en prise le bras d'essuie-glace sur l'arbre d'entraînement 3, par exemple au moyen de cannelures réparties sur sa circonférence.

La tête 9 de l'arbre d'entraînement 1 se trouve en général dans une zone du véhicule qui est abondamment arrosée par des projections d'eau qui proviennent des conditions de roulage et/ou d'essuyage de la vitre du véhicule. Il existe donc un besoin d'assurer une étanchéité entre l'arbre d'entraînement 1 et le fût 2 du boîtier 5 pour éviter que de l'eau ne pénètre dans le fût 7 et ne vienne endommager les moyens de liaison précités, voire le moteur 2.

Dans les descriptions qui suivent, les dénominations axiales et transversales se réfèrent à l'axe longitudinal de l'arbre d'entraînement 3.

Pour assurer l'étanchéité précitée, il est connu, comme c'est représenté sur les figures 2 et 3, de placer un joint torique 9 entre l'arbre 3 et le fût 7, dans l'extrémité libre du fût 7, et de monter également dans cette extrémité libre une bague 10 qui est traversée par l'arbre 3. Le joint torique 9 assure principalement l'étanchéité entre l'arbre 3 et le fût 7. La bague 10 maintient le joint torique 9 en place et forme également une première barrière d'étanchéité. Elle protège l'ouverture du fût 7 des aspersions directes, fait office de déflecteur, et peut protéger également la graisse entourant le joint torique 9.

De manière connue également, cette bague 10 est généralement montée en force dans l'extrémité libre du fût 7 en l'insérant par l'extrémité libre de ce dernier d'où sort la tête 9 de l'arbre d'entraînement 1. La bague 10 comporte une collerette extérieure 11 venant en appui sur le bord périphérique extérieur 12 de l'extrémité libre du fût 7. Cet appui permet de positionner simplement la bague 10 pour qu'elle forme avec la paroi intérieure du fût 7 un logement du joint torique 9, sans l'écraser. On peut ainsi réaliser de manière économique un dispositif de passage de l'arbre 3 par le fût 7, étanche et protégeant la motorisation entraînant le bras d'essuie-glace.

Cependant, on constate avec ce type de montage que, lors du fonctionnement de l'essuie-glace, la bague d'étanchéité 10 peut se déplacer vers l'extérieur du fût 7 à cause des mouvements de rotation de l'arbre d'entraînement 3 et du frottement de ce dernier dans la bague 10.

Le montage en force de la bague 10 dans le fût 7 peut ne pas s'avérer suffisant pour la maintenir axialement, notamment parce que l'on maîtrise mal les tolérances sur les deux pièces, qui sont généralement en plastique, et parce que le dispositif peut être soumis à des variations de température lors de son utilisation sur le véhicule.

L'invention propose une solution simple, efficace et économique à ce problème.

L'invention propose à cet effet un élément de carter d'un boîtier de motorisation pour un essuie-glace, en particulier de véhicule automobile, ledit élément de carter comportant un fût configuré pour être traversé selon un axe longitudinal par un arbre rotatif dudit boîtier de motorisation, ledit élément de carter comportant en outre une bague, montée coaxiale ment à l'intérieur d'une extrémité libre dudit fût et configurée pour être traversée par ledit arbre, caractérisé en ce que le fût comprend ou porte des premiers moyens de butée et de retenue axiale de ladite bague vers l'extérieur dudit fût.

L'extrémité libre du fût fait référence à la partie terminale du fût comportant une ouverture de sortie du boîtier de motorisation pour l'arbre rotatif. Elle détermine, suivant l'axe longitudinal, une orientation vers l'extérieur du fût, sortant du fût par l'extrémité libre, et une orientation vers l'intérieur du fût, en sens inverse.

Notamment en ce qui concerne la bague, la notion de longueur est assimilée dans ce document à celle d'extension selon l'axe longitudinal.

L'invention peut être réalisée à partir de matériel existant, sans modifier la forme générale du fût. Lesdits premiers moyens de butée et de retenue axiale de la bague vers l'extérieur du fût évitent que la rotation de l'arbre d'entraînement ne l'amène à sortir progressivement du fût. On peut ainsi maintenir simplement l'intégrité du dispositif d'étanchéité à l'extrémité libre du fût.

Avantageusement, lesdits premiers moyens de butée et de retenue axiale comportent au moins un bossage, et de préférence au moins trois bossages.

De manière préférentielle, ledit au moins un bossage est formé par déformation plastique du fût.

Avantageusement, ledit au moins un bossage est situé sur un bord périphérique de ladite extrémité libre du fût.

Le bord périphérique de l'extrémité libre du fût fait référence dans ce document à la partie des parois du fût entourant l'ouverture de sortie de ladite extrémité libre du fût.

De préférence, le fût comprend plusieurs bossages régulièrement répartis autour de l'axe longitudinal du fût.

Selon un mode de réalisation préférentiel, ledit au moins un bossage prend appui axialement sur une surface annulaire extérieure de la bague, située à une extrémité longitudinale de cette dernière.

Ladite surface annulaire extérieure de la bague peut avoir une forme sensiblement tronconique avec un diamètre diminuant en allant vers l'extérieur dudit fût

Avantageusement, dans ce cas, lesdits bossages sont en contact avec ladite surface annulaire extérieure de la bague sur au moins une partie de leur longueur, la longueur étant mesurée selon un axe de la bague.

Dans une alternative, ladite surface annulaire extérieure de la bague peut être sensiblement transversale ou radiale par rapport audit axe longitudinal.

Avantageusement, ladite extrémité longitudinale comporte une lèvre annulaire intérieure, qui est de préférence configurée pour coopérer à l'étanchéité avec l'arbre d'entraînement en vue d'assurer une étanchéité.

Cela permet d'établir une première barrière d'étanchéité entre la bague et l'arbre rotatif. La bague étant retenue axialement, le frottement de l'arbre sur la lèvre intérieure ne risque pas d'entraîner la bague vers l'extérieur du boîtier.

Le fût peut comprendre ou porter des deuxièmes moyens de butée et de retenue axiale de ladite bague vers l'intérieur dudit fût.

Cette butée axiale permet en particulier de positionner la bague, par exemple pour ménager un logement annulaire pouvant recevoir un joint torique.

Dans ce cas, lesdits deuxièmes moyens de butée et de retenue axiale comprennent avantageusement un épaulement annulaire interne du fût.

La bague, quant à elle, comporte avantageusement au moins une face annulaire extérieure agencée pour coopérer avec ledit épaulement annulaire du fût et arrêter axialement la bague vers l'intérieur du fût.

Par ailleurs, la bague peut être montée serrée radialement à l'intérieur du fût, sur au moins une partie de sa longueur.

L'invention concerne également un procédé de fabrication d'un élément de carter tel que décrit précédemment, comportant les étapes consistant à : a) insérer la bague dans l'extrémité libre du fût jusqu'à une position déterminée ; et b) déformer plastiquement la matière du fût pour former lesdits premiers moyens de butée et de retenue axiale de la bague vers l'extérieur du fût.

Avantageusement, la déformation de matière est obtenue en exerçant une poussée sur le fût, dans au moins une direction sensiblement radiale par rapport audit axe longitudinal et/ou dans au moins une direction sensiblement parallèle audit axe longitudinal.

De préférence, la poussée est réalisée dans plusieurs zones régulièrement réparties autour de l'axe longitudinal dudit fût.

L'invention concerne également un boîtier de motorisation pour un essuie-glace, en particulier un véhicule automobile, comportant un élément de carter tel que décrit ci-dessus.

La présente invention sera mieux comprise et d'autres détails, caractéristiques et avantages de celle-ci apparaîtront plus clairement à la lecture de la description qui suit, faite à titre d'exemple non limitatif, et en référence aux dessins annexés, dans lesquels :
La figure 1 présente une vue en perspective d'un exemple de boîtier de motorisation pour un essuie-glace de véhicule automobile.
La figure 2 présente une vue en perspective d'une tête d'un arbre d'entrainement et d'un élément de carter, selon l'art antérieur, du boîtier de motorisation de la figure 1.
La figure 3 présente une coupe axiale schématique de l'arbre d'entrainement et de l'élément de carter, selon l'art antérieur, de la figure 2.
La figure 4 présente une vue partielle en perspective d'un premier mode de réalisation d'un élément de carter selon l'invention.
La figure 5 présente une coupe schématique suivant un plan médian P représenté sur la figure 4 de l'élément de carter de la figure 4.
La figure 6 présente une vue en perspective de la bague appartenant à l'élément de carter de la figure 4.
Les figures 7, 8 et 9 présentent les mêmes vues que les figures 4, 5 et 6 pour un deuxième mode de réalisation d'un élément de carter selon l'invention.
Les figures 10, 11 et 12 présentent les mêmes vues que les figures 4, 5 et 6 pour un troisième mode de réalisation d'un élément de carter selon l'invention.

Un boîtier de motorisation 1 pour un essuie glace selon l'invention peut comprendre en référence à la figure 1, un moteur électrique 2 dont l'arbre de sortie entraîne un arbre 3 d'entraînement du bras d'essuie-glace (non représenté), des moyens de liaison entre l'arbre d'entraînement 3 et l'arbre de sortie du moteur 2, et un carter 4 de protection, dont un élément 6, formant par exemple un couvercle, comporte un fût 7 traversé par l'arbre d'entraînement 3. Le carter 4 comprend en général un autre élément 5, formant par exemple une base fixée au couvercle par des moyens appropriés. Le fût 7 s'étend du côté opposé à la base 5. L'arbre d'entraînement 3 comprend une extrémité ou tête 8 qui dépasse du fût 7 et qui permet de mettre en prise le bras d'essuie-glace sur l'arbre d'entraînement 3, par exemple au moyen de cannelures réparties sur sa circonférence.

Les moyens de liaison entre les arbres sont essentiellement mécaniques et transforment la rotation continue du moteur électrique 2 en un mouvement de rotation alternatif pour le bras d'entraînement 3. Cependant, cet exemple n'est pas limitatif. L'invention concerne également le cas où le carter 4 protège des éléments de transmission, qui peuvent comporter, par exemple, de l'électronique pilotant directement un mouvement rotatif de va et vient du moteur électrique. Le moteur électrique peut être également positionné de sorte que son arbre de sortie fasse office d'arbre d'entraînement pour le bras d'essuie-glace et traverse alors lui-même le fût 7.

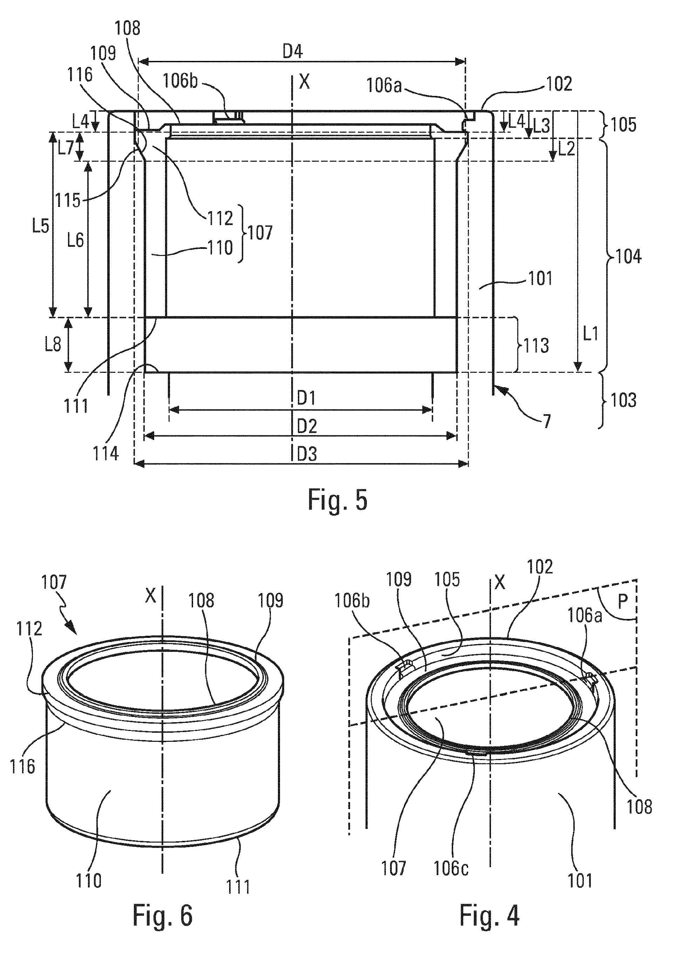

L'invention concerne plus particulièrement l'élément de carter 6 du boîtier de motorisation 1 comportant le fût 7. Les figures 5 à 12 représentent des variantes de réalisation de l'invention.

En référence aux figures 5, 8 et 11, le fût 7 est tubulaire et comprend une extrémité libre 101, 201, 301 définissant une ouverture de sortie, entourée par un bord périphérique 102, 202, 302. Cette ouverture de sortie est destinée à laisser passer l'arbre d'entraînement 3 pour le relier au bras d'essuie-glace. Dans la suite de la description, la notion d'orientation axiale fera référence à direction de l'axe longitudinal X. Une orientation axiale vers l'intérieur revient à une orientation le long dudit axe X vers l'intérieur du carter 4 (c'est-à-dire vers la base 5), et une orientation axiale vers l'extérieur revient à une orientation le long dudit axe X vers l'extérieur du carter 4 (c'est-à-dire dans la direction opposée à la base 5).

Selon un premier mode de réalisation de l'invention représenté sur les figures 4 à 6, le fût 7 comporte au niveau de l'extrémité libre 101:
- un premier tronçon 104, s'étendant axialement entre une distance maximale L1 et une distance minimale L2 du bord périphérique 102 de l'extrémité libre 101 du fût 7 ; ce premier tronçon 104 est cylindrique, a un diamètre interne D2 supérieur à celui D1 du reste du fût (c'est-à-dire la partie 103 du fût 7 du côté intérieur) et est relié à son extrémité axiale intérieure à une surface annulaire transversale 114 ;
- un deuxième tronçon 105 sensiblement évasé, s'étendant axialement du bord périphérique 102 au premier tronçon 104 ; ce deuxième tronçon 105 comporte une partie extérieure cylindrique, de diamètre interne constant D3 sur une distance L3 à partir du bord périphérique 102, et un épaulement annulaire intérieur défini par une surface annulaire 115 de forme sensiblement tronconique, s'étendant entre ladite partie extérieure cylindrique et le premier tronçon 104.

La partie intérieure 103 du fût 7 s'étend axialement vers l'intérieur à partir de la distance L1 du bord périphérique 102 de l'extrémité libre 101 ; le diamètre interne D1 de cette partie intérieure 103 est ici légèrement supérieur au diamètre de l'arbre d'entraînement 3, pour le laisser tourner librement.

Il est à noter que le diamètre D2 du premier tronçon 104 est ici défini de manière à ce que l'on puisse placer un joint torique, non représenté, entre la surface interne du fût 7 et l'arbre d'entraînement 3, au niveau du deuxième tronçon 104 et en particulier sur la surface transversale 114.

Par ailleurs, des petites languettes, ou bossages, 106a, 106b, 106c s'étendent radialement vers l'intérieur à partir de la partie extérieure cylindrique du deuxième tronçon 105 du fût 7. Ces bossages, ici au nombre de trois sont avantageusement régulièrement répartis sur la circonférence de la partie cylindrique. Ces bossages106a, 106b, 106c restent avantageusement à l'extérieur d'un cylindre dont le diamètre correspond au diamètre interne D1 de la partie intérieure 103 du fût 7. De plus, ces bossages 106a, 106b, 106c présentent une face transverse axialement vers l'intérieur situées dans un plan transverse à une distance déterminée L4 du bord périphérique 102 de l'extrémité libre 101, qui est inférieure à l'extension axiale L3 de la partie extérieure cylindrique du deuxième tronçon 103 du fût 7.

En référence aux figures 5 et 6, la surface cylindrique interne de la bague 107 a un diamètre sensiblement égal ou légèrement supérieur au diamètre interne D1. L'extrémité longitudinale extérieure de la bague 107 comprend une surface annulaire transversale 109 et une collerette annulaire 108 s'étendant radialement vers l'intérieur par rapport à l'axe X. La collerette 108 forme une lèvre de diamètre interne ajusté pour former une étanchéité autour de l'arbre d'entraînement 3, tout en permettant son mouvement de rotation.

La bague 107 a une longueur axiale L5 sensiblement inférieure à la distance L1. La bague 107 comporte une partie principale 110 comportant une surface externe cylindrique, et qui s'étend sur une longueur L6 à partir de l'extrémité longitudinale intérieure 111 de la bague 107. Le diamètre externe de cette partie principale 110 est sensiblement égal au diamètre interne D2, de manière à pouvoir insérer en force la bague 107 dans le premier tronçon 104 du fût 7 et à ce qu'elle y soit serrée radialement.

La bague 107 comporte également un rebord annulaire externe 112 à son extrémité longitudinale extérieure. La longueur ou extension axiale L7 dudit rebord 112 est ici inférieure à l'extension axiale L2 du deuxième tronçon 105 du fût 7. Ici, L7=L5 - L6.

Le rebord externe 112 comprend une partie cylindrique de diamètre externe D4, s'étendant à partir de la surface transversale 109 et raccordée à la partie cylindrique principale 110 de la bague 107 par une surface annulaire 116 de forme sensiblement tronconique. Le diamètre D4 est supérieur au diamètre D2 et, ici, légèrement inférieur au diamètre D3. L'angle d'ouverture de la surface annulaire 116 est, quant à lui, sensiblement égal à celui de la surface annulaire 115, de sorte que les surfaces 115, 116 soient sensiblement complémentaires.

Par ailleurs, comme on peut le voir sur la figure 5, la surface annulaire 115 forme une surface d'appui et de butée axiale de la surface 116 de la bague 107. Dans la position représentée en figure 5, la surface annulaire transversale 111 de l'extrémité intérieure de la bague 107 est à une distance L8 de la surface annulaire transversale 114.

Cette distance L8 est déterminée de manière à fournir un logement 113 permettant de maintenir axialement le joint torique précité dans le premier tronçon 104 du fût 7.

De plus, l'extension axiale L7 du rebord est déterminée pour que la surface annulaire 109 de la bague 107 soit située à la même distance L4 du bord périphérique 102 de l'extrémité libre 101 du fût 7 que les faces transversales intérieures des bossages 106a, 106b, 106c.

De cette manière, les faces transversales intérieures des bossages 106a, 106b, 106c forment des butées axiales qui empêchent la bague 107 de sortir de l'extrémité libre 101 du fût 7 et qui maintiennent son rebord 112 en appui contre la surface 115 du fût 7, en plus du montage serré dans le deuxième tronçon 104 du fût 7.

L'élément de carter 6 qui vient d'être décrit peut être obtenu par un procédé dans lequel on fabrique préalablement un fût 7 comportant, à son extrémité libre 101, les deux tronçons 104, 105 décrits précédemment, mais où le deuxième tronçon 105 a une section interne intégralement annulaire, sans les bossages 106a, 106b, 106c. On réalise préférentiellement ce fût 7 dans un matériau plastique, par exemple du PBT-PET-GF30 ou du PBT-ASA-GF30, qui peut être déformé de manière plastique à température ambiante, lors de la fabrication de l'équipement.

De manière correspondante, une bague 107 adaptée est fabriquée. Elle est généralement également fabriquée dans un matériau plastique, notamment pour des raisons de coût. Cependant ce matériau plastique est de préférence rigide à température ambiante.

Dans une première étape d'assemblage, la bague 107 est insérée en force dans le tronçon 104 de l'extrémité libre 101 du fût 7, jusqu'à ce que sa surface annulaire 116 vienne en butée axiale vers l'intérieur sur la surface annulaire 115 de l'extrémité libre 101 du fût 7.

Dans une étape suivante, on place un outil de sertissage, non représenté dans les figures, sur le fût 7. Au cours de cette étape on peut centrer l'outil de sertissage sur l'axe du fût, par exemple en plaçant trois griffes qui formeront les bossages, lorsqu'il y en a trois, sur le bord périphérique 102 de l'extrémité libre 101 du fût 7.

Il est préférable de prévoir au moins trois endroits où l'on effectue ces déformations de matière dans la paroi du fût 7, d'une part pour centrer correctement l'outil de sertissage, d'autre part pour répartir les appuis axiaux vers l'intérieur formé par les bossages 106a, 106b, 106c et bloquer correctement la bague 107.

Ensuite, en appuyant sur les parois du fût 7 dans des directions sensiblement parallèles à l'axe longitudinal avec les griffes de l'outil de sertissage, on peut alors déformer plastiquement les parois du fût 7, près de la surface intérieure pour former les bossages 106a, 106b, 106c visibles sur les figures.

De cette manière, on réalise simplement une configuration où les faces transversales, axialement intérieures, de ces bossages 106a, 106b, 106c sont en contact avec la surface annulaire 109 de l'extrémité extérieure de la bague 107 et maintiennent cette dernière dans la position décrite précédemment.

Au cours de cette étape, la déformation plastique de matière est bien sûr contrôlée pour que les bossages 106a, 106b, 106c ne s'étendent pas à l'intérieur de la bague 107. De préférence, les bossages ne touchent pas la collerette 108 de la bague 107.

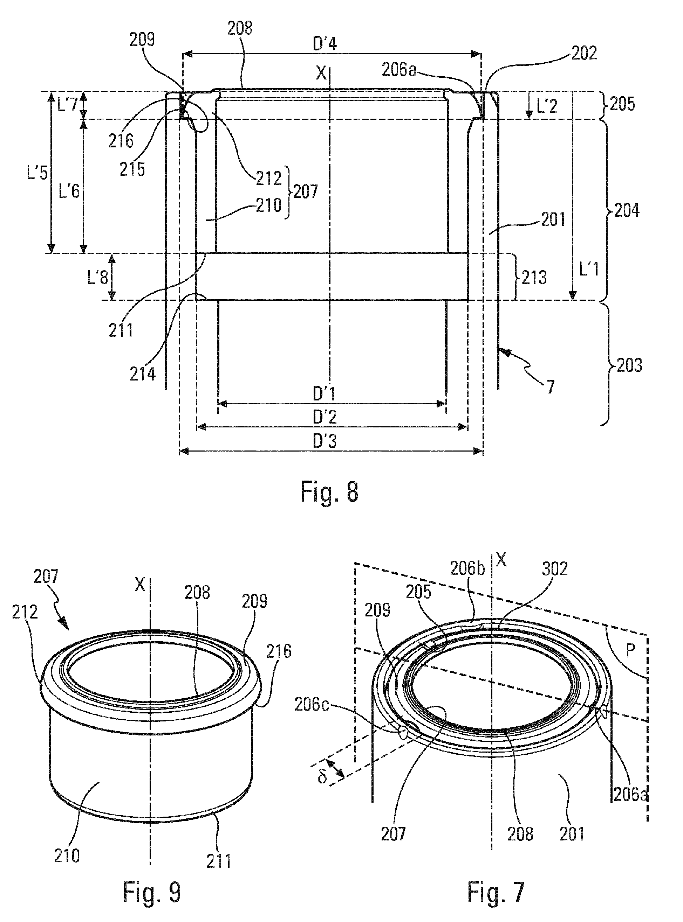

Selon un deuxième mode de réalisation de l'invention, représenté sur les figures 7 à 9, le fût 7 comporte également, au niveau de l'extrémité libre 201 :
- une premier tronçon 204, s'étendant axialement entre une distance maximale L'1 et une distance minimale L'2 du bord périphérique 202 de l'extrémité libre 201 du fût 7 ; cette premier tronçon a un diamètre interne D'2 supérieur à celui D'1 du reste du fût (c'est-à-dire la partie 203 du fût 7 du côté intérieur) et est relié à une surface annulaire transversale 214 ;
- un deuxième tronçon 205, s'étendant axialement du premier tronçon 204 au bord périphérique 202 de l'extrémité libre du 201 du fût 7; ce deuxième tronçon 205 a une section circulaire de diamètre constant D'3, supérieur au diamètre D'2 du premier tronçon 204 et comprend un épaulement annulaire intérieur défini par une surface annulaire transversale 215 à la frontière avec le premier tronçon 204.

Comme précédemment, la partie intérieure 203 du fût 7 s'étend axialement vers l'intérieur à partir de la distance L'1 du bord périphérique 202 de l'extrémité libre 201 du fût 7 ; et son diamètre interne D'1 est légèrement supérieur au diamètre de l'arbre d'entraînement 3, pour le laisser tourner librement.

Comme précédemment, le diamètre D'2 du premier tronçon 204 est ici défini de manière à ce que l'on puisse placer un joint torique, non représenté, entre la surface interne du fût 7 et l'arbre d'entraînement, au niveau du premier tronçon 204 de l'extrémité libre 201.

Par ailleurs, en référence à la figure 7 des bossages 206a, 206b, 206c sont réalisés sur l'intérieur du deuxième tronçon 205 de l'extrémité libre 201 du fût 7. Ces bossages sont ici au nombre de trois régulièrement répartis sur la circonférence. L'un d'eux 206a est visible en coupe médiane sur la figure 8. Chacun de ces bossages 206a, 206b, 206c s'étend radialement vers l'intérieur en partant de l'extrémité axiale intérieure du deuxième tronçon 205 de l'extrémité libre 201, jusqu'au bord périphérique 202 de cette dernière 201. Dans le plan médian de chaque bossage 206a, la surface intérieure de ce dernier suit la directrice d'un cône convergent en allant axialement vers l'extérieur. La surface intérieure de chaque bossage 206a, 206b, 206c a sensiblement la même largeur circonférentielle δ, à l'intérieur de laquelle elle rejoint de manière continue la section circulaire de diamètre D'3 du deuxième tronçon 205 de l'extrémité libre 201. Ces bossages 206a, 206b, 206c restent avantageusement à l'extérieur d'un cylindre dont le diamètre correspond au diamètre interne D'1 de la partie intérieure 203 du fût 7.

Par ailleurs, on peut voir que ces bossages 206a, 206b, 206c correspondent à une déformation de la surface extérieure du fût 7 au niveau du deuxième tronçon 205 de l'extrémité libre 201. La déformation de surface extérieure du fût 7 suit sensiblement la déformation de la surface intérieure correspondant aux bossages 206a, 206b, 206c, maintenant sensiblement constante l'épaisseur des parois du fût 7.

Comme précédemment, en référence aux figures 8 et 9, la surface intérieure de la bague 207 a un diamètre sensiblement égal ou légèrement supérieur au diamètre interne D'1. L'extrémité longitudinale extérieure de la bague 207 comprend une surface annulaire transversale 209 et une collerette annulaire 208 s'étendant radialement vers l'intérieur par rapport à l'axe X. La collerette 208 forme une lèvre de diamètre interne ajusté pour former une étanchéité autour de l'arbre d'entraînement 3, tout en permettant son mouvement de rotation.

La bague 207 a une longueur axiale L'5 sensiblement inférieure à la distance L'1. La bague 207 comporte une partie principale 210 comportant une surface externe cylindrique, et qui s'étend sur une longueur L'6 à partir de l'extrémité longitudinale intérieure 211 de la bague 207. Comme précédemment, le diamètre externe de cette partie principale 210 est sensiblement égal au diamètre interne D'2, de manière à pouvoir insérer en force la bague 207 dans le premier tronçon 204 du fût 7 et à ce qu'elle y soit serrée radialement.

La bague 207 comporte également un rebord annulaire externe 212 à son extrémité longitudinale extérieure. La longueur ou extension axiale L'7de dudit rebord 212 est ici approximativement égale à l'extension axiale L'2 du deuxième tronçon 205 du fût 7. Ici, L'7=L'5 - L'6.

Le rebord externe 212 comporte, à son extrémité longitudinale intérieure, une surface annulaire transversale 216 dont le diamètre extérieur D'4 est supérieur au diamètre interne D'2 du premier tronçon 204 du fût 7 et, ici, légèrement inférieur au diamètre interne D'3 du deuxième tronçon 205 du fût 7. Le rebord externe 212 comporte, de plus, une surface annulaire externe 209 ayant sensiblement la forme d'un cône, qui converge ici en partant du bord externe de la surface annulaire 216 et en allant vers l'extrémité longitudinale extérieure de la bague 207.

Par ailleurs, comme on peut le voir sur la figure 8, la surface annulaire 215 du fût 7 forme une surface d'appui et de butée axiale de la surface 216 de la bague 207. Dans la position représentée en figure 8, la surface annulaire transversale 211 de l'extrémité intérieure de la bague 207 est à une distance L'8 de la surface annulaire transversale 214. Cette distance L'8 est déterminée de manière à fournir un logement 213 permettant de maintenir axialement le joint torique précité dans le premier tronçon 204 du fût 7.

Comme on peut le voir sur la figure 8, la directrice du cône de la partie centrale de chaque bossage 206a, dans un plan radial passant par l'axe de symétrie X, est sensiblement la même que celle du cône de la surface annulaire 209 de la bride 212. De cette manière, dans la position représentée sur cette figure, les bossages 206a, 206b, 206c appuient sur la surface 209 du rebord 212, sensiblement le long de leur extension axiale, et forment une butée de retenue axiale de la bague 207.

La bague 207 est donc maintenue axialement en position dans le fût 7 par les bossages 206a, 206b, 206c et l'épaulement annulaire interne 215 du fût7, en plus du montage serré dans le deuxième tronçon 204 du fût 7.

Comme dans le premier mode de réalisation, l'élément de carter 6 qui vient d'être décrit peut être obtenu par un procédé utilisant une déformation plastique de la matière du fût 7 pour former les bossages 206a, 206b, 206c.

Comme précédemment, on fabrique préalablement, avec des matériaux similaires, un fût 7 comportant, à son extrémité libre 201, les deux tronçons 204, 205 décrits précédemment, mais où le deuxième tronçon 205 a une section intégralement annulaire, sans les bossages 206a, 206b, 206c. On fabrique de même la bague correspondante 207.

Dans une première étape d'assemblage, la bague 207 est insérée en force dans le tronçon 204 de l'extrémité libre 201 du fût 7, jusqu'à ce que sa surface annulaire 216 vienne en butée axiale vers l'intérieur sur la surface annulaire 215 de l'extrémité libre 201 du fût 7.

Dans une étape suivante, on place un outil de sertissage, non représenté dans les figures, sur le fût 7. Au cours de cette étape on peut centrer l'outil de sertissage sur l'axe X du fût 7, par exemple en plaçant trois griffes qui formeront les bossages, lorsqu'il y en a trois, sur le bord périphérique 202 de l'extrémité libre 201 du fût 7.

Il est préférable de prévoir au moins trois endroits où l'on effectue ces déformations de matière dans la paroi du fût 7, d'une part pour centrer correctement l'outil de sertissage, d'autre part pour répartir les appuis axiaux vers l'intérieur formé par les bossages 206a, 206b, 206c et bloquer correctement la bague 207.

Ensuite, on appuie avec les griffes de l'outil de sertissage dans des directions sensiblement radiales par rapport à l'axe X et orientées vers l'intérieur, sur la surface extérieure du fût 7, sensiblement au niveau du deuxième tronçon 205 de l'extrémité libre 201, autrement dit en face de la surface annulaire tronconique 209 de la bague 207. On peut alors déformer plastiquement les parois du fût 7 pour former les bossages 206a, 206b, 206c visibles sur les figures.

De cette manière, on réalise simplement une configuration où la partie circonférentiellement centrale de ces bossages 206a, 206b, 206c vient en contact en contact de la surface annulaire tronconique 209 de la bride 212 de la bague 207, sensiblement sur toute la longueur axiale de ces bossages.

Au cours de cette étape, la déformation plastique du fût 7 est bien sûr contrôlée pour que les bossages 206a, 206b, 206c ne s'étendent pas dans le cylindre interne de la bague 207. De préférence, ils ne touchent pas la collerette 208 de la bague 207.

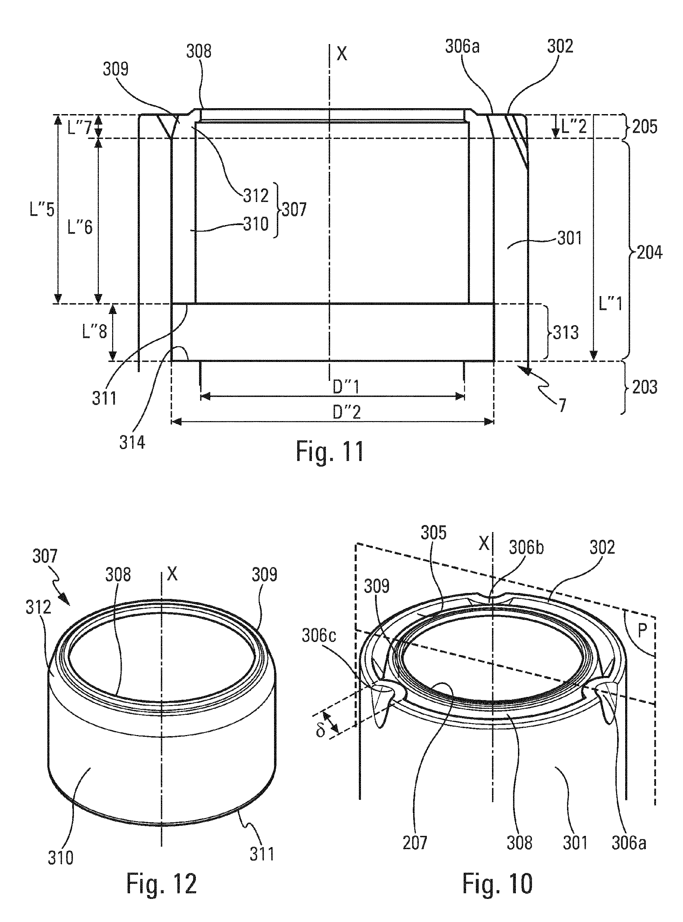

Dans un troisième exemple de l'invention, représenté sur les figures 10 à 12, le fût 7 comporte toujours, au niveau de l'extrémité libre 301 :
- un premier tronçon 304, s'étendant axialement entre une distance maximale L "1 et une distance minimale L"2 du bord périphérique 302 de l'extrémité libre 301 du fût 7 ; ce premier tronçon 304 est cylindrique, a un diamètre interne D"2 supérieur du reste du fût D"1 (c'est-à-dire de la partie 303 du fût du côté intérieur) et est relié à son extrémité axiale vers l'intérieur à une surface annulaire transversale 314 ;
- un deuxième tronçon 305 sensiblement évasé, s'étendant axialement du premier tronçon 304 au bord périphérique 302 de l'extrémité libre 301 du fût 7; la surface interne de ce deuxième tronçon 305 a une forme conique divergente vers l'extérieur en partant d'un diamètre interne égal à celui D"2 du premier tronçon 304, diminuant ainsi progressivement l'épaisseur des parois du fût 7 au niveau de ce deuxième tronçon 305.

Comme précédemment, la partie intérieure 303 du fût 7 s'étend axialement vers l'intérieur à partir de la distance L"1 du bord périphérique 302 de l'extrémité libre 301 du fût 7 ; et son diamètre interne D"1 est légèrement supérieur au diamètre de l'arbre d'entraînement 3, pour le laisser tourner librement.

Comme précédemment, le diamètre D"2 du premier tronçon 304 est ici défini de manière à ce que l'on puisse placer un joint torique, non représenté, entre la surface interne du fût 7 et l'arbre d'entraînement 3, au niveau du premier tronçon 304 de l'extrémité libre 301.

Par ailleurs, en référence à la figure 10 des bossages 306a, 306b, 306c sont réalisés sur l'intérieur du deuxième tronçon 305 de l'extrémité libre 301 du fût 7. Ces bossages sont ici au nombre de trois régulièrement répartis sur la circonférence. L'un d'eux 306a est visible en coupe médiane sur la figure 11. Chacun de ces bossages 306a, 306b, 306c s'étend radialement vers l'intérieur, dans le deuxième tronçon 305 de l'extrémité libre 301, en partant de l'extrémité longitudinale intérieure dudit deuxième tronçon 305, jusqu'au bord périphérique 302 de l'extrémité libre 301. Dans le plan médian de chaque bossage 306a, la surface intérieure de ce dernier suit la directrice d'un cône convergent en allant axialement vers l'extérieur. La surface intérieure de chaque bossage 306a, 306b, 306c a sensiblement la même largeur circonférentielle δ, à l'intérieur de laquelle elle rejoint de manière continue la section interne circulaire de diamètre D"3 du deuxième tronçon 305 de l'extrémité libre 301. Ces bossages 306a, 306b, 306c restent avantageusement à l'extérieur d'un cylindre dont le diamètre correspond au diamètre interne D"1 de la partie intérieure 303 du fût 7.

Par ailleurs, on peut voir que ces bossages 306a, 306b, 306c correspondent à une déformation de la surface extérieure du fût 7. Au niveau du deuxième tronçon 305 de l'extrémité libre 301, la déformation de surface extérieure du fût 7 suit sensiblement la déformation de la surface intérieure correspondant aux bossages 306a, 306b, 306c, maintenant sensiblement constante l'épaisseur des parois du fût 7. Par contre, la déformation de la surface extérieure du fût 7 se poursuit au niveau du premier tronçon 304 de l'extrémité libre 301, en continuité de la déformation au niveau du deuxième tronçon 305.

Comme précédemment, en référence aux figures 11 et 12, la surface intérieure de la bague 307 a un diamètre sensiblement égal ou légèrement supérieur au diamètre interne D"1. L'extrémité longitudinale extérieure de la bague 307 comprend une surface annulaire transversale 309 et une collerette annulaire 308 s'étendant radialement vers l'intérieur par rapport à l'axe X. La collerette 308 forme une lèvre de diamètre interne ajusté pour former une étanchéité autour de l'arbre d'entraînement 3, tout en permettant son mouvement de rotation.

La bague 307 a une longueur axiale L"5 sensiblement inférieure à la distance L"1. La bague 307 comporte une partie principale 310 comportant une surface externe cylindrique, et qui s'étend sur une longueur L"6 à partir de l'extrémité longitudinale intérieure 311 de la bague 307. Comme précédemment, le diamètre externe de cette partie principale 310 est sensiblement égal au diamètre interne D"2, de manière à pouvoir insérer en force la bague 307 dans le premier tronçon 304 du fût 7 et à ce qu'elle y soit serrée radialement.

La bague 307 comporte également un bord extérieur 312 qui s'étend entre son extrémité longitudinale extérieure et sa partie principale 310. La longueur ou extension axiale L"7 de cette partie finale extérieure 312 est ici approximativement égale à l'extension axiale L"2 du deuxième tronçon 305 du fût 7. Ici, L"7=L"5 - L"6.

Le bord extérieur 312 comporte une surface annulaire extérieure 309, qui a sensiblement une forme tronconique, qui converge ici en partant de l'extrémité longitudinale extérieure de la surface externe de la partie principale 310 et en allant vers l'extrémité longitudinale extérieure de la bague 307.

Comme on peut le voir sur la figure 11, la directrice du cône de la partie centrale de chaque bossage 306a, dans le plan radial passant par l'axe de symétrie X, est sensiblement la même que celle du cône de la surface annulaire 309 du bord extérieur 312 de la bague 307. De cette manière, les bossages 306a, 306b, 306c appuient sur le bord extérieur 312 de la bague 307, sensiblement le long de toute leur extension axiale et forment une butée de retenue axiale vers l'extérieur de la bague 307.

Par ailleurs, dans la position représentée en figure 11, l'extrémité longitudinale extérieure de la partie principale 310 de la bague 307 est positionnée sensiblement au niveau de l'extrémité longitudinale extérieure du premier tronçon 304 du fût 7. La longueur axiale L"6 de la partie principale 310 de la bague 307 est ajustée par rapport à la longueur axiale L"9 du premier tronçon 304 du fût 7, de manière à ce qu'une surface annulaire transversale 311 formant l'extrémité longitudinale intérieure de la bague 307 soit à une distance L"8 de la surface annulaire transversale 314 de l'extrémité longitudinale intérieure du premier tronçon 304 du fût 7.

Cette distance L"8 est déterminée de manière à fournir un logement 313 permettant de maintenir axialement le joint torique précité dans le premier tronçon 304 du fût 7.

Dans ce mode de réalisation, le maintien axial vers l'intérieur de la bague 307 est assuré par les frictions de la surface externe de la partie principale 310 de la bague 307 contre la surface interne du premier tronçon 304 du fut 7. On peut remarquer à ce sujet qu'un éventuel déplacement axial de la bague 307 vers l'intérieur, dû par exemple aux vibrations lors du fonctionnement des essuie-glaces, serait bloqué par le joint torique, non représenté.

Comme dans les précédents modes de réalisation, l'élément de carter 6 qui vient d'être décrit peut être obtenu par un procédé utilisant un déplacement de matière pour former les bossages 306a, 306b, 306c.

Comme précédemment, on fabrique préalablement, avec des matériaux similaires, un fût 7 comportant, à son extrémité libre 301, les deux tronçons 304, 305 décrits précédemment, mais où le deuxième tronçon 305 a une section intégralement circulaire, sans les bossages 306a, 306b, 306c. On fabrique de même la bague correspondante 307.

Ici, selon une première variante, dans une première étape d'assemblage, la bague 307 est insérée en force dans le premier tronçon 304 de l'extrémité libre 301 du fût 7, jusqu'à positionner axialement l'extrémité longitudinale extérieure de la partie principale 310 sensiblement au niveau de l'extrémité longitudinale extérieure du premier tronçon 304 de l'extrémité libre 301 du fût 7, de manière à ménager exactement la distance axiale L"8 voulue pour le logement 313 du joint torique.

Dans une étape suivante, on place un outil de sertissage, non représenté dans les figures, sur le fût 7. Au cours de cette étape on peut centrer l'outil de sertissage sur l'axe du fût, par exemple en plaçant trois griffes qui formeront les bossages, lorsqu'il y en a trois, sur le bord périphérique 302 de l'extrémité libre 301 du fût 7.

Il est préférable de prévoir au moins trois endroits où l'on effectue ces déformations de matière dans la paroi du fût 7, d'une part pour centrer correctement l'outil de sertissage, d'autre part pour répartir les appuis axiaux vers l'intérieur formé par les bossages 306a, 306b, 306c et bloquer correctement la bague 307.

Ensuite, on appuie avec les griffes de l'outil de sertissage dans des directions sensiblement radiales par rapport à l'axe X et orientées vers l'intérieur, sur la surface extérieure du fût 7, sensiblement au niveau du deuxième tronçon 305 de l'extrémité libre 301, autrement dit en face de la surface annulaire tronconique 309 de la bague 307. On peut alors déformer plastiquement les parois du fût 7 pour former les bossages 306a, 306b, 306c visibles sur les figures.

De cette manière, on réalise simplement une configuration où la partie circonférentiellement centrale de ces bossages 306a, 306b, 306c vient en contact en contact avec la surface annulaire 309 de la bague 307, sensiblement sur toute la longueur axiale de ces bossages.

Comme dans le deuxième mode de réalisation, au cours de cette étape, la déformation plastique est bien sûr contrôlée pour que les bossages 306a, 306b, 306c ne s'étendent pas à l'intérieur de la bague 307. De préférence, ils ne touchent pas la collerette 308 de la bague 307. De plus, on s'assure que les pressions exercées n'induisent pas de déplacement axial vers l'intérieur de la bague 307, pour ne pas modifier la longueur L"8 du logement du joint torique.

Selon une deuxième variante de réalisation du procédé, lors de l'étape d'insertion en force de la bague 307 dans le fût 7, on s'arrête légèrement avant que la bague 307 ne soit dans sa position finale. Autrement dit, on laisse une extension axiale pour le logement 313 du joint torique légèrement supérieure à celle L"8 qui est visée.

Dans cette variante, lors de la réalisation des bossages 306a, 306b, 306c, l'outil de sertissage appuie également dans le sens axial vers l'intérieur, et la déformation plastique est effectuée en contrôlant le déplacement axial de la bague 307 de manière à rattraper la différence avec l'extension axiale L"8 visée pour le logement 313 du joint torique.

## Revendications

1. Elément de carter (6) d'un boîtier de motorisation (1) pour un essuie-glace, en particulier de véhicule automobile, ledit élément de carter comportant un fût (7) configuré pour être traversé selon un axe longitudinal (X) par un arbre (3) rotatif dudit boîtier de motorisation (1), ledit élément de carter comportant en outre une bague (107, 207, 307), montée coaxialement à l'intérieur d'une extrémité libre (101, 201, 301) dudit fût (7) et configurée pour être traversée par ledit arbre, **caractérisé en ce que** le fût (7) comprend ou porte des premiers moyens (106a-b-c, 206a-b-c, 306a-b-c) de butée et de retenue axiale de ladite bague (107, 207, 307) vers l'extérieur dudit fût (7).

2. Elément de carter (6) selon la revendication 1, **caractérisé en ce que** lesdits premiers moyens de butée et de retenue axiale comportent au moins un bossage (106a-b-c, 206a-b-c, 306a-b-c), et de préférence au moins trois bossages.

3. Elément de carter (6) selon la revendication 2, dans lequel ledit au moins un bossage (106a-b-c, 206a-b-c, 306a-b-c) est formé par déformation plastique du fût (7).

4. Elément de carter (6) selon la revendication 2 ou 3, dans lequel ledit au moins un bossage (106a-b-c, 206a-b-c, 306a-b-c) est situé sur un bord périphérique (102, 202, 302) de l'extrémité libre (101, 201, 301) du fût (7).

5. Elément de carter (6) selon l'une des revendications 2 à 4, dans lequel le fût (7) comprend plusieurs bossages (106a-b-c, 206a-b-c, 306a-b-c) régulièrement répartis autour de l'axe longitudinal (X) du fût (7).

6. Elément de carter (6) selon l'une des revendications 2 à 5, dans lequel ledit au moins un bossage (106a-b-c, 206a-b-c, 306a-b-c) prend appui axialement sur une surface annulaire extérieure (109, 209, 309) de la bague (107, 207, 307), située à une extrémité longitudinale de cette dernière.

7. Elément de carter (6) selon la revendication 6, dans lequel ladite surface annulaire extérieure (209, 309) de la bague (207, 307) a une forme sensiblement tronconique avec un diamètre diminuant en allant vers l'extérieur dudit fût (7).

8. Elément de carter (6) selon la revendication 6, dans lequel ladite surface annulaire extérieure (109) de la bague (107) est sensiblement transversale ou radiale par rapport audit axe longitudinal (X).

9. Elément de carter (6) selon l'une des revendications 6 à 8, dans lequel ladite extrémité longitudinale de la bague (107, 207, 307) comporte une lèvre annulaire intérieure (108, 208, 308), qui est de préférence configurée pour coopérer avec l'arbre d'entraînement en vue d'assurer une étanchéité.

10. Elément de carter (6) selon l'une des revendications 1 à 9, dans lequel le fût (7) comprend ou porte des deuxièmes moyens (115, 215) de butée et de retenue axiale de ladite bague (107, 207), vers l'intérieur dudit fût (7).

11. Elément de carter selon la revendication 10, dans lequel lesdits deuxièmes moyens de butée et de retenue axiale comprennent un épaulement annulaire interne (115, 215) du fût (7).

12. Elément de carter (6) selon l'une des revendications 1 à 11, dans lequel la bague (107, 207, 307) est montée serrée radialement à l'intérieur du fût (7), sur au moins une partie (110, 210, 211) de sa longueur.

13. Procédé de fabrication d'un élément de carter (6) selon l'une des revendications précédentes, comportant les étapes consistant à: a) insérer la bague (107, 207, 307) dans l'extrémité libre (101, 201, 301) du fût (7) jusqu'à une position déterminée ; et b) déformer plastiquement le fût (7) pour former lesdits premiers moyens (106a-b-c, 206a-b-c, 306a-b-c) de butée et de retenue axiale de la bague (107, 207, 307) vers l'extérieur dudit fût (7).

14. Procédé de fabrication selon la revendication précédente, dans lequel la déformation de matière est obtenue en exerçant une poussée sur le fût (7), dans au moins une direction sensiblement radiale par rapport audit axe longitudinal (X) et/ou dans au moins une direction sensiblement parallèle audit axe longitudinal.

15. Procédé de fabrication selon la revendication précédente, dans lequel la poussée est réalisée dans plusieurs zones régulièrement réparties autour de l'axe longitudinal (X) dudit fût (7).

16. Boîtier de motorisation (1) pour un essuie-glace, en particulier de véhicule automobile, **caractérisé en ce qu'**il comprend un élément de carter (6) selon l'une des revendications 1 à 12.
